# EUROPÄISCHE PATENTSCHRIFT

(11) **EP 2 663 463 B1**
(45) Veröffentlichungstag und Bekanntmachung des Hinweises auf die Patenterteilung: **29.10.2014**
(21) Anmeldenummer: 11788883.4
(22) Anmeldetag: 01.12.2011
(51) Int. Cl.: B62D 21/11, F16F 7/108

(54) **LAGERUNG EINES ACHSGETRIEBES IM HECKBEREICH EINES PERSONENKRAFTWAGENS**
SUPPORT OF AN AXLE TRANSMISSION IN THE REAR REGION OF A PASSENGER VEHICLE
MONTAGE D'UNE TRANSMISSION D'ESSIEU À L'ARRIÈRE D'UNE VOITURE PARTICULIÈRE

(30) Priorität: 14.01.2011 DE 102011002700
(43) Veröffentlichungstag der Anmeldung: 20.11.2013
(73) Patentinhaber: Bayerische Motoren Werke Aktiengesellschaft, 80809 München (DE)
(72) Erfinder: STENZENBERGER, Alfred, 86681 Fuenfstetten (DE); KÜHLEWIND, Steffen, 81827 München (DE); WENDLAND, Norbert, 80997 München (DE)
(86) Internationale Anmeldenummer: PCT/EP2011/071561
(87) Internationale Veröffentlichungsnummer: WO 2012/095217

(56) Entgegenhaltungen:
- EP-A2- 0 170 220
- DE-A1- 10 229 757
- DE-A1-102005 031 999
- DE-C1- 3 920 442
- JP-A- 57 192 641

## Beschreibung

Die Erfindung betrifft die Lagerung eines Achsgetriebes im Heckbereich eines Personenkraftwagens einerseits an einem Hinterachsträger und andererseits in einer weiteren Anbindungsstelle an der Bodenblechstruktur des Fahrzeugaufbaus unter Zwischenschaltung von elastischen Lagern. Zum Stand der Technik wird neben der DE 10 2004 004 417 A1 auf die EP 0 170 220 A1 verwiesen.

In der letztgenannten Schrift ist ein einfacher im wesentlichen nur aus einem Querträger bestehender Hinterachsträger einer Schräglenkerachse gezeigt, an dem ein Achsgetriebe bzw. ein dort sog. Differentialgehäuse mit seiner Eingangsseite gelagert ist, während die Ausgangsseite dieses Achsgetriebes oder Differentialgehäuses, in deren Bereich die zu den angetriebenen Fahrzeug-Rädern führenden Abtriebswellen an die beiden Getriebe-Ausgänge angeflanscht sind, über einen eigenständigen Getriebeträger am Bodenblech des Fahrzeugs befestigt ist.

An heute gängigen Personenkraftwagen mit aufwändigeren, insbesondere mehrere (einzelne) radführende Lenker je Rad aufweisenden Achskonstruktionen ist - soweit vorhanden - ein Achsgetriebe üblicherweise an drei Punkten eines annähernd rechteckigen rahmenförmigen, aus zwei Längsträgern und zwei Querträgern aufgebauten Hinterachsträgers, an dem die meisten der radführenden Lenker befestigt sind, elastisch gelagert. Über diese elastische Lagerung des Achsgetriebes im Hinterachsträger in Verbindung mit der ebenfalls elastischen Lagerung des Hinterachsträgers an der Bodenblechstruktur des Fahrzeug-Aufbaus, zu der auch darin eingearbeitete Karosserie-Längsträger und dgl. zählen, wird eine unerwünschte Einleitung höherfrequenter Schwingungen, die von den Verzahnungen des Achsgetriebes ausgehen, in den Fahrzeugaufbau vermieden. Gelangen hingegen solche höherfrequenten Schwingungen beispielsweise über ein defektes elastisches Lager in den Fahrzeug-Aufbau, so können sich diese Schwingungen als gefürchtetes "Singen" des Achsgetriebes, das über den als Resonanzkörper wirkenden Fahrzeug-Aufbau für die Insassen des Fahrzeugs störend hörbar wird, bemerkbar machen.

Grundsätzlich hat sich der zuletzt geschilderte gängige Aufbau bewährt, jedoch benötigt ein solcher annähend rechteckiger rahmenförmiger Hinterachsträger relativ viel Bauraum und schränkt daher den nutzbaren Raum im Bereich der Hinterachse eines Personenkraftwagens ein.

Einen diesbezüglich günstigeren Hinterachsträger und eine an einen solchen günstigeren Hinterachsträger angepasste vorteilhafte Lagerung eines Achsgetriebes nach dem Oberbegriff des Anspruchs 1 aufzuzeigen, ist Aufgabe der vorliegenden Erfindung.

Die Lösung dieser Aufgabe ist dadurch gekennzeichnet, dass das Achsgetriebe abtriebsseitig am einzigen Querträger des Hinterachsträgers, der weiterhin zwei Längsträger aufweist, gelagert ist, und eingangsseitig über eine Reihenschaltung zweier elastischer Lager mit einem dazwischen liegenden Massekörper an der Bodenblechstruktur befestigt ist. Vorzugsweise ist das Achsgetriebe an zwei im wesentlichen in Fahrzeug-Querrichtung nebeneinander liegenden Anbindungsstellen an der Bodenblechstruktur befestigt, wofür zwei solche Reihenschaltungen elastischer Lager mit einem gemeinsamen Massekörper vorgesehen sind. Vorzugsweise liegt das Gewicht des Massekörpers in der Größenordnung von 3 Kilogramm bis 7 Kilogramm.

Einerseits ist vorliegend ein Hinterachsträger vorgeschlagen, der neben zwei im wesentlichen in Fahrzeug-Längsrichtung ausgerichteten Längsträgern nur mehr einen einzigen diese beiden Längsträger miteinander verbindenden und an diesen befestigten, im wesentlichen in Fahrzeug-Querrichtung verlaufenden Querträger anstelle der bisher üblichen zwei zueinander parallelen Querträger besitzt. Mit dem Entfall des bzw. eines zweiten Querträgers wird in diesem Bereich nun zusätzlicher Freiraum geschaffen, der sich erfindungsgemäß im Bereich der Eingangsseite eines Achsgetriebes besonders vorteilhaft auswirkt, indem dieser Bauraum als Stauraum oder für den Fahrzeug-Innenraum optimal genutzt werden kann. Demgemäß weist ein erfindungsgemäßer Hinterachsträger nur noch einen einzigen, in Fahrtrichtung betrachtet vorzugsweise hinteren Querträger auf, an dem das Achsgetriebe abtriebsseitig, d.h. im Bereich seiner Getriebe-Ausgänge aufgehängt ist. Eingangsseitig, d.h. im Bereich des Eingangs der vom im Fahrzeug-Frontbereich angeordneten Antriebsaggregat her kommenden Kardanwelle ist das Achsgetriebe erfindungsgemäß direkt an der Bodenblechstruktur des Fahrzeugaufbaus gelagert. In Fahrzeug-Quenichtung betrachtet erstrecken sich die beiden Längsträger vorzugsweise über in diesen Lagerungsbereich hinaus nach vorne in Fahrtrichtung des Fahrzeugs, sind dabei jedoch abweichend vom üblichen Stand der Technik hier nicht durch einen (weiteren) Querträger miteinander verbunden. Damit bestehen, was den entsprechend gestalteten Hinterachsträger betrifft, mit dessen beiden Längsträgern weiterhin ausreichende Möglichkeiten für die Befestigung von radführenden Lenkern. Der genannte, durch den Entfall eines Querträgers geschaffene zusätzliche Freiraum ist dann besonders groß, wenn der von den zu den angetriebenen Fahrzeugrädern führenden Abtriebswellen des Achsgetriebes weiter entfernte Querträger entfällt; in der Regel handelt es sich dabei um den in Fahrtrichtung betrachtet vorderen Querträger des Hinterachsträgers. Als einziger Querträger eines erfindungsgemäßen Hinterachsträgers verbleibt somit derjenige nahe der Abtriebswellen des Achsgetriebes, so dass dieses Achsgetriebe abtriebsseitig weiterhin in bewährter Weise an diesem Querträger und somit am Hinterachsträger gelagert bzw. befestigt werden kann.

Eingangsseitig, d.h. im Flansch-Bereich der Kardanwelle ist das Achsgetriebe dann mangels eines Querträgers an der Bodenblechstruktur des Fahrzeug-Aufbaus befestigt. Um zu verhindern, dass über diese Befestigung höherfrequente, vom Achsgetriebe bzw. von dessen Verzahnungen ausgehende Schwingungen in den Fahrzeug-Aufbau gelangen, ist erfindungsgemäß eine Reihenschaltung von zwei elastischen Lagern mit einem zwischen diesen Lagern liegenden Massekörper vorgesehen. Dieser Massekörper ist somit sowohl gegenüber dem Fahrzeug-Aufbau bzw. dessen Bodenblechstruktur als auch gegenüber dem Achsgetriebe elastisch, d.h. unter Zwischenschaltung oder Einbindung von Gummilager-Elementen elastisch gelagert und ist daraufhin ausgelegt, gezielt eine Masse, die eine in einem bestimmten höheren Bereich liegende Gewichtskraft aufweist bzw. erzeugt, zwischen dem Gehäuse des Achsgetriebes und dessen Aufhängung am Fahrzeug-Aufbau einzubinden. In Abhängigkeit vom Wert der kritischen höherfrequenten Schwingungen des Achsgetriebes, die üblicherweise im Bereich 400 - 600 Hertz liegen, ist diese Gewichtskraft gewählt, die vorzugsweise in der Größenordnung von 3 bis 7 Kilogramm liegen kann.

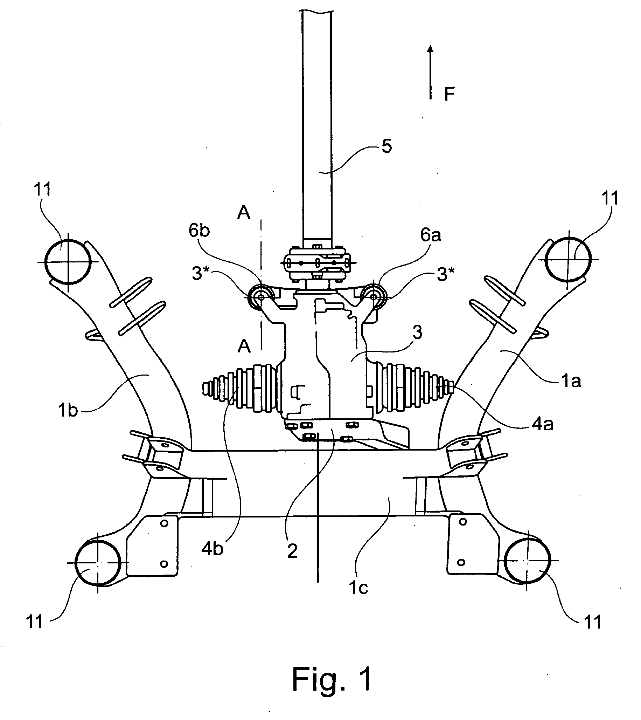

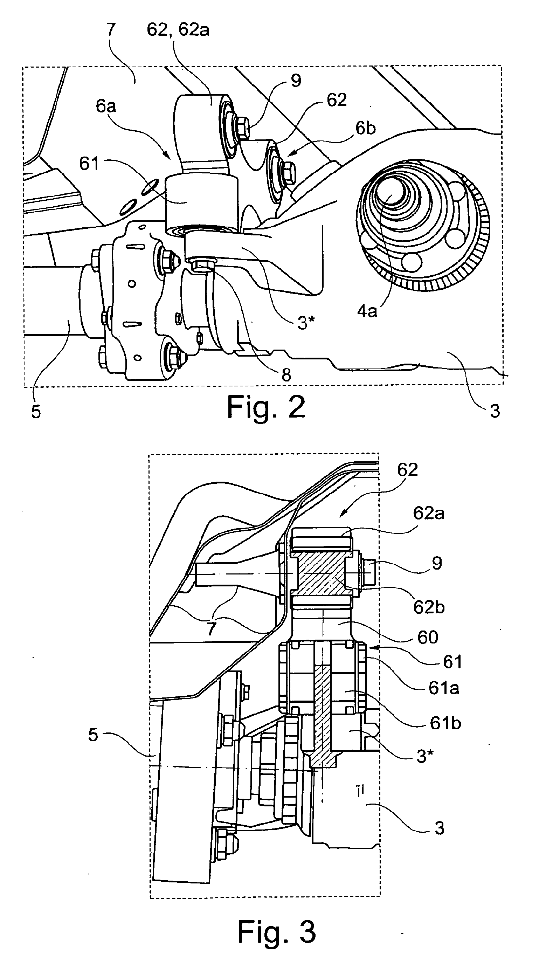

Im folgenden wird die Erfindung anhand eines Ausführungsbeispiels weiter erläutert, wobei die beigefügte Figur 1 die Aufsicht von unten auf einen erfindungsgemäßen Hinterachsträger mit Achsgetriebe eines Personenkraftwagens zeigt, während in Figur 2 eine perspektivische Ansicht der getriebeeingangsseitigen Lagerung des Achsgetriebes an der Bodenblechstruktur des Fahrzeugaufbaus und in Figur 3 der Schnitt A-A aus Figur 1 dargestellt ist.

Zunächst auf Fig.1 Bezug nehmend ist mit der Bezugsziffer 1 ein Hinterachsträger eines Personenkraftwagens gekennzeichnet, der erfindungsgemäß aus zwei spiegelbildlich zueinander verlaufenden im wesentlichen in Fzg. -Längsrichtung ausgerichteten Längsträgern 1 a, 1b und einem diese beiden Längsträger 1 a, 1b verbindenden Querträger 1c aufgebaut ist, der in Fzg.-Querrichtung verläuft. Unter anderem an diesem Querträger 1 c ist über einen Stützarm 2 ein Achsgetriebe 3 abgestützt, an dessen beiden Ausgänge zwei nur ansatzweise dargestellte Gelenkwellen 4a (als die in Fahrtrichtung F des Fahrzeugs betrachtet linke Gelenkwelle) und 4b (als rechte Gelenkwelle) angeflanscht sind. Der Stützarm 2 befindet sich wie ersichtlich in Fahrtrichtung F betrachtet vor dem Querträger 1 c.

An der Eingangsseite des Achsgetriebes 3 ist wie üblich eine Kardanwelle 5 angeflanscht. Im Bereich seiner Eingangsseite ist das Achsgetriebe 3 über zwei in Fzg.-Querrichtung nebeneinander bzw. in Fzg.-Querrichtung betrachtet hintereinander liegende Anbindungsstellen 6a, 6b an der Bodenblechstruktur 7 des Fahrzeugaufbaus befestigt, wie detailliert die im folgenden erläuterten Figuren 2, 3 zeigen.

Jede Anbindungsstelle 6a, bzw. 6b ist durch eine Reihenschaltung zweier elastischer Lager 61, 62 gebildet, zwischen denen ein Massekörper 60 angeordnet ist, der solchermaßen gestaltet ist, dass für die beiden nebeneinander liegenden Anbindungsstellen 6a, 6b ein gemeinsamer Massekörper 60 vorgesehen ist. Wie insbesondere Fig.3 zeigt ist ein näher an der Fahrbahn liegendes unteres elastisches Lager 61, bestehend aus einer zylindrischen Lagerhülse 61 a und einem innerhalb dieser angeordneten Elastomerkörper 61 b mittels einer den Elastomerkörper 61 b gegen einen Flansch 3* des Achsgetriebes 3 ziehenden und vertikal ausgerichteten Schraube 8 an besagtem Flansch 3* angeflanscht. Die Lagerhülse 61a dieses Lagers 61 ist fest mit dem genannten Massekörper 60 verbunden bzw. ist ein Bestandteil desselben.

Im wesentlichen in Vertikalrichtung oberhalb des unteren Lagers 61 ist für jede Anbindungsstelle 6a, 6b ein weiteres oberes elastisches Lager 62 vorgesehen, welches ähnlich dem unteren Lager 61 aufgebaut ist, nämlich aus einer mit dem Massekörper 60 fest verbundenen bzw. einen Bestandteil desselben bildenden Lagerhülse 62a besteht, innerhalb derer ein Elastomerkörper 62b angeordnet ist, welcher mittels einer Schraube 9 an der Bodenblechstruktur 7 des Fahrzeug-Aufbaus befestigt ist. Dabei ist vorliegend dieses obere Lager 62 solchermaßen geformt, dass die besagte Schraube 9 in Fahrzeug-Längsrichtung ausgerichtet ist, jedoch ist dies nicht zwingend erforderlich. Die Bodenblechstruktur 7 des Fahrzeugautbaus ist dabei im Befestigungsbereich dieser Schraube 9 solchermaßen verstärkt ausgebildet, dass über die beiden Schrauben 9 der beiden Anbindungsstellen 6a, 6b zusammen mit der Anbindung des Achsgetriebes 3 über den genannten Stützarm 2 am Querträger 1c des Hinterachsträgers 1 dieses Achsgetriebe 3 sicher am Fahrzeug-Aufbau befestigt ist, wobei wie weiter oben geschildert durch die besondere Gestaltung der Anbindungsstellen 6a, 6b verhindert wird, dass störende Schwingungen und somit Geräusche aus dem Achsgetriebe 3 in den Fahrzeug-Aufbau gelangen. Hinsichtlich der Abstützung des Achsgetriebes 3 am Hinterachsträger 1 wird dies in üblicher Weise über eine elastische Lagerung des Stützarms 2 am Querträger 1 c und über die ebenfalls übliche elastische Lagerung des Hinterachsträgers 1 in den vier an den Enden der beiden Längsträger 1a, 1 b vorgesehenen Lagerstellen 11 gegenüber der Bodenblechstruktur des Fahrzeugaufbaus realisiert.

## Patentansprüche

1. Lagerung eines Achsgetriebes (3) im Heckbereich eines Personenkraftwagens einerseits an einem Hinterachsträger (1) und andererseits in einer weiteren Anbindungsstelle (6a, 6b) an der Bodenblechstruktur (7) des Fahrzeugaufbaus unter Zwischenschaltung von elastischen Lagern (61, 62),
**dadurch gekennzeichnet, dass** das Achsgetriebe (3) abtriebsseitig am einzigen Querträger (1 c) des Hinterachsträgers (1), der weiterhin zwei Längsträger (1a, 1b) aufweist, gelagert ist, und eingangsseitig über eine Reihenschaltung zweier elastischer Lager (61, 62) mit einem dazwischen liegenden Massekörper (60) an der Bodenblechstruktur (7) befestigt ist.

2. Lagerung nach Anspruch 1,
**dadurch gekennzeichnet, dass** das Achsgetriebe (3) an zwei im wesentlichen in Fahrzeug-Querrichtung nebeneinander liegenden Anbindungsstellen (6a, 6b) an der Bodenblechstruktur (7) befestigt ist, wofür zwei solche Reihenschaltungen elastischer Lager (61, 62) mit einem gemeinsamen Massekörper (60) vorgesehen sind.

3. Lagerung nach Anspruch 1 oder 2,
**dadurch gekennzeichnet, dass** das Gewicht des Massekörpers (60) in der Größenordnung von 3 Kilogramm bis 7 Kilogramm liegt.

## Claims

1. A support of an axle transmission (3) in the rear region of a passenger vehicle, on the one hand on a rear axle carrier (1) and on the other hand in a further connecting point (6a, 6b) on the floor panel structure (7) of the vehicle body with the interposition of elastic bearings (61, 62), **characterised in that** the axle transmission (3) is mounted on the output side on the single transverse member (1 c) of the rear axle carrier (1), which furthermore has two longitudinal members (1a, 1b), and, on the input side, is fastened by means of a series connection of two elastic bearings (61, 62) with a mass body (60) located therebetween on the floor panel structure (7).

2. A support according to claim 1, **characterised in that** the axle transmission (3) is fastened to two connecting points (6a, 6b) located next to one another substantially in the transverse direction of the vehicle on the floor panel structure (7), for which two such series connections of elastic bearings (61, 62) with a common mass body (60).are provided.

3. A support according to claim 1 or 2, **characterised in that** the weight of the mass body (60) is in the order of magnitude of 3 kilograms to 7 kilograms.

## Revendications

1. Montage d'une transmission d'essieu (3) dans la zone arrière d'une voiture particulière, d'une part sur un support d'essieu arrière (1) et d'autre part, dans une autre partie de connexion (6a, 6b) sur la structure de tôle de plancher (7) de la carrosserie du véhicule avec interposition de paliers élastiques (61, 62),
**caractérisé en ce que**
la transmission d'essieu (3) est montée, côté sortie, sur un support transversal unique (1c) du support d'essieu arrière (1) qui comporte en outre deux supports longitudinaux (1a, 1b), et, côté entrée, sur la structure de tôle de plancher (7) par l'intermédiaire d'un montage en série de deux paliers élastiques (61, 62) avec un corps de masse (60) situé entre ces paliers.

2. Montage conforme à la revendication 1,
**caractérisé en ce que**
la transmission d'essieu (3) est fixée sur la structure de tôle de plancher (7) en deux points de connexion (6a, 6b) situés côte à côte essentiellement dans la direction transversale du véhicule, ce pourquoi deux de tels montages en série de paliers élastiques (61, 62) sont équipés d'un corps de masse (60) commun.

3. Montage conforme à la revendication 1 ou 2,
**caractérisé en ce que**
le poids du corps de masse (60) a un ordre de grandeur de 3 à 7 kilogrammes.
